# EUROPÄISCHE PATENTANMELDUNG

(11) **EP 0 864 795 A2**
(43) Veröffentlichungstag der Anmeldung: **16.09.1998**
(21) Anmeldenummer: 98104445.6
(22) Anmeldetag: 12.03.1998
(51) Int. Cl.: F16L 5/04

(54) **Vorrichtung zur Rohrabschottung**

(30) Priorität: 14.03.1997 DE 29704635 U
(71) Anmelder: Friatec Aktiengesellschaft, 68229 Mannheim (DE)
(72) Erfinder: Schulze, Hans, 68535 Edingen-Neckarhausen (DE); Bläss, Jürgen, 69493 Hirschberg (DE)
(74) Vertreter: Schmitt, Meinrad, Dipl.-Ing.

(57) **Zusammenfassung**

Eine Vorrichtung zur Rohrabschottung und zum Schallschutz enthält eine Schicht (8) aus hitzebeständigem Material sowie eine das Rohr (6) umgebende Schicht zum Schallschutz. Diese Vorrichtung soll dahingehend weitergebildet werden, daß mit geringem konstruktiven Aufwand sowohl den Anforderungen für den Brandschutz als auch für den Schallschutz funktionssicher entsprochen wird. Es wird vorgeschlagen, daß eine einzige Schicht (8) für integrierten Brandschutz und Schallschutz vorgesehen ist, welcher Material mit einem Schmelzpunkt größer 800° C enthält.

## Beschreibung

Die Erfindung bezieht sich auf eine Vorrichtung zur Rohrabschottung und zum Brandschutz gemäß den im Oberbegriff des Patentanspruchs 1 angegebenen Merkmalen.

Aus dem europäischen Patent gemäß EP 635 655 C1 ist eine derartige Vorrichtung bekannt, welche in einer Durchführung einer Wand oder Decke eines Gebäudes anzuordnen ist und insbesondere in Verbindung mit Kunststoffrohren zum Einsatz gelangt. Sie enthält wenigstens eine an der Wand oder Decke anzuordnende Rohrmanschette, welche auf der Innenseite mit einem unter Hitzeeinwirkung nach innen ausdehnbaren, feuerfesten Blähmaterial ausgekleidet ist. Die Rohrmanschette enthält außen ein Gehäuse aus Metall mit einer derart dicken Wandstärke, daß unter Hitzeeinwirkung ein Ausweichen radial nach außen nicht möglich ist. Innerhalb des Gehäuses bzw. der Rohrabschottung sind ferner schalldämmende Schichten vorgesehen, welche eine Übertragung von Körperschallwellen vom Rohr auf die Decke bzw. Wand verhindern sollen. Das feuerfeste Blähmaterial einerseits und das schalldämmende Material andererseits sind als separate Baugruppen, insbesondere ringförmig innerhalb des Gehäuses angeordnet und umgeben ihrerseits nach der Montage das Kunststoffrohr. Der Fertigungsaufwand der vorbekannten Vorrichtung ist im Hinblick auf den gegliederten Aufbau von Gehäuse, Blähmaterial sowie schalldämmendem Material nicht unerheblich. Vor allem das aus Festigkeitsgründen aus Metall bestehende Gehäuse erfordert einen erheblichen Fertigungsaufwand und Materialeinsatz und aufgrund des recht hohen Gesamtgewichtes können sich vor allem bei größeren Rohrdurchmessern beträchtliche Probleme in der Handhabung ergeben. Beim Einbau in eine Decke müssen im Hinblick auf das Gesamtgewicht zusätzliche Maßnahmen getroffen werden, damit die vorbekannte Vorrichtung während der Montage, vor und während des Ausgießens freier Zwischenräume mit geeignetem, insbesondere mineralischen Mörteln, die Positionierung in der Durchführung und/oder bezüglich des Rohres gewährleistet werden kann. Aufgrund des vergleichsweise großen Gesamtdurchmessers der vorbekannten Vorrichtung, müssen zur Montage in Kernbohrungen diese mit einem vergleichsweise großen Durchmesser ausgebildet werden, was einen beträchtlichen Aufwand erfordert.

Hiervon ausgehend liegt der Erfindung die Aufgabe zugrunde, die Vorrichtung dahingehend weiterzubilden, daß mit geringem konstruktivem Aufwand sowohl den Anforderungen der Rohrabschottung für den Brandschutz als auch den Anforderungen für den Schallschutz funktionssicher entsprochen wird. Ferner sollen die Vorschriften zur Wärmedämmung, insbesondere nach der deutschen Heizungsanlagenverordnung erfüllt werden. Die Vorrichtung soll einfach herzustellen sein und problemlos handhabbar sein und dauerhaft über viele Jahre den Anforderungen genügen.

Die Lösung dieser Aufgabe erfolgt gemäß den in Patentanspruch 1 angegebenen Merkmalen.

Die erfindungsgemäße Vorrichtung zeichnet sich durch eine einfache und funktionsgerechte Konstruktion aus und dient dem Brandschutz gleichermaßen wie dem Schallschutz. Ein stabiles Gehäuse ist nicht erforderlich, welches bisher beim Einsatz von Blähmaterial zwingend erforderlich war, um bei Hitzeeinwirkung eine radiale Ausdehnung des Blähmaterials von außen entgegenzuwirken. Auch sind keine besonderen Maßnahmen erforderlich, um vor allem während der Montage die Positionierung der Vorrichtung in der Durchführung bzw. auf dem Rohr sicherzustellen.

Die Vorrichtung entspricht der Brandschutzverordnung, Klasse F 90, und ist besonders für schwer entflammbare Rohre aus Kunststoff geeignet. Die Vorrichtung weist eine Mindestlänge im wesentlichen entsprechend der Dicke der Wand oder Decke auf, durch welche das Rohr hindurchgeführt ist. Die Vorrichtung gelangt bevorzugt zusammen mit Rohren zum Einsatz, deren Außendurchmesser wenigstens 32 mm beträgt. Die Länge ist vorzugsweise maximal mit 300 mm vorgegeben, vorzugsweise bis maximal 200 mm. Da die Vorrichtung im wesentlichen bündig mit den Außenflächen der Wand bzw. der Decke angeordnet wird, können unmittelbar anschließend an den Austritt des Rohres aus der Wand oder der Decke ein Rohrbogen anschließen, wodurch in zweckmäßiger Weise eine optimale Verlegung und Führung der Rohrleitung erreicht wird.

Eine mit der Vorrichtung versehene Decken- oder Wanddurchführung entspricht ferner auch den Vorschriften der Wärmedämmung, insbesondere nach DIN und der Heizungsanlagenverordnung. Die Vorrichtung enthält eine Schale oder Schicht aus formbeständigen Material, insbesondere Steinwolle oder Glaswolle mit einem Schmelzpunkt > 800°C, zweckmäßig > 900°C und vorzugsweise > 1000°C.

Die Vorrichtung oder Schale besteht erfindungsgemäß im wesentlichen aus kunstharzgebundener Steinwolle und besitzt eine Dichte im Bereich zwischen 2,4 bis 2,8 g/cm³, insbesondere im wesentlichen von 2,6 g/cm³. Des weiteren weist das Material der Vorrichtung bzw. der genannten Schale eine Schüttdichte im Bereich zwischen 20 bis 250 kg/m³, vorzugsweise zwischen 27 bis 200 kg/m³ auf. Um beim Ausgießen des Zwischenraumes, welcher zwischen der Außenfläche der Vorrichtung und dem Inneren des Wand- oder Deckendurchbruchs besteht, das Eindringen von Feuchtigkeit und / oder Brandschutzmörtel zu vermeiden, besteht die Vorrichtung bzw. Schale oder Schicht im wesentlichen aus einem feuchtigkeitsabweisenden Material. Eine Kaschierung aus Aluminium oder dergleichen als Feuchtigkeitssperre an der Außenfläche der Vorrichtung ist bei dieser besonderen Ausgestaltung nicht erforderlich.

Die Schale oder Schicht besteht aus nichtbrennbarem Material und ist in vorgegebener Länge, insbesondere in Form einer Manschette, um das Rohr legbar. Die Schale ist zumindest teilweise derart flexibel und geteilt ausgebildet, daß sie nach Art einer Manschette um das bereits montierte Rohr gelegt und in der Durchführung nachträglich positioniert werden kann. Die Vorrichtung besitzt zweckmäßig wenigstens eine, vorzugsweise im wesentlichen achsparallel verlaufende, Trennstelle, welche ein Aufklappen ermöglicht und nach dem Aufschieben auf das Rohr mit Verbindungsmitteln, wie Klebstoff, Draht, Klettverschluß, Klebeband oder ähnlichem wieder geschlossen werden kann. Obgleich die längsgeteilte Ausführung der Vorrichtung eine besonders einfache Handhabung ermöglicht, liegen im Rahmen der Erfindung auch über den Umfang geschlossene Ausführungsformen, welche vor der endgültigen Montage eines Rohrleitungssystems auf den betreffenden Rohrabschnitt aufgeschoben werden und nach der Montage der Rohrleitung in die Durchführung zu schieben und zu positionieren sind.

Die erfindungsgemäße Vorrichtung wird bevorzugt in Kombination mit Rohren, insbesondere aus schwer entflammbarem Kunststoff, verwendet, deren Außendurchmesser mindestens 32 mm groß ist. Da die Länge maximal mit 300 mm vorgegeben ist, wird mit einem äußerst geringen Materialeinsatz den Vorschriften für Brandschutz, insbesondere Klasse F 90, ebenso entsprochen wie für Schallschutz.

Die Schale und insgesamt die erfindungsgemäße Vorrichtung besteht in einer besonderen Ausgestaltung der Erfindung im wesentlichen aus einem Steinwolle-Dämmstoff oder aus einem vergleichbaren Material, insbesondere Mineral- oder Glaswolle, um den Anforderungen hinsichtlich Brandschutz, Schallschutz und Wärmedämmung mit geringstem Aufwand zu entsprechen. Ein stabiles Gehäuse ist nicht erforderlich. Lediglich für den Feuchtigkeitsschutz beim Ausgießen des Decken- oder Mauerdurchbruchs kann in zweckmäßiger Weise an der Außenfläche eine Kaschierung oder dünne Folie, vorzugsweise aus Kunststoff oder Aluminium vorgesehen sein, deren Dicke vorzugsweise < 0,5 mm betragen kann. Die Vorrichtung entspricht den Brandschutzanforderungen der Feuerwiderstandsklasse F 90.

Weiterbildungen und besondere Ausgestaltungen der Erfindung sind in den Unteransprüchen sowie der weiteren Beschreibung angegeben.

Die Erfindung wird nachfolgend anhand der in der Zeichnung dargestellten Ausführungsbeispiele näher erläutert. Es zeigen:
- Fig. 1: eine schematische Darstellung einer Wanddurchführung,
- Fig. 2: eine schematische Darstellung einer Deckendurchführung.
- Fig. 3: schematisch einen Schnitt durch einen Wand- oder Deckendurchbruch.

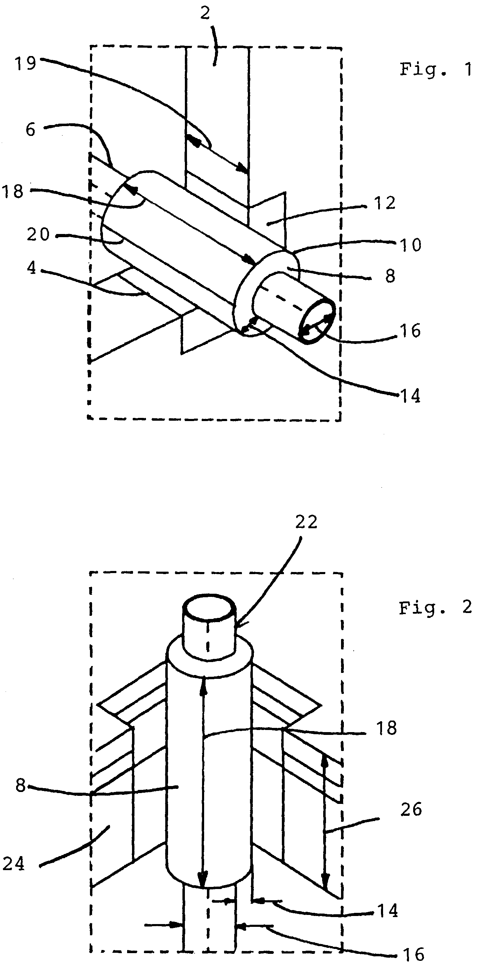

Fig. 1 zeigt die erfindungsgemäße Vorrichtung als Wanddurchführung, und zwar perspektivisch und teilweise geschnitten in einer Wand 2 mit einer Durchführung 4 für ein Rohr 6, welches insbesondere aus Kunststoff besteht. Das Rohr 6 ist von der Vorrichtung umgeben, welche eine Schicht oder Schale 8 und an deren Außenfläche eine Kaschierung 10 oder Folie aufweist. Grundsätzlich genügt im Rahmen der Erfindung die Schale 8 zum Ummanteln des Rohres 6, da die Vorrichtung bzw. die Schale 8 aus einem feuchtigkeitsabweisenden Material, wie insbesondere kunstharzgebundene Steinwolle besteht. Zusätzlich kann die Kaschierung 10 oder Folie in zweckmäßiger Weise als Feuchtigkeitssperre vorgesehen sein, um nach der Montage beim Ausfüllen der Durchführung 4 mit geeignetem Mörtel 12 oder dergleichen ein Eindringen von Feuchtigkeit in die Schale 8 zu unterbinden. In der Regel genügt jedoch im Rahmen der Erfindung die Verwendung eines feuchtigkeitsabweisenden Materials für die Schale 8. Die Kaschierung oder Folie 10 besteht zweckmäßig aus Aluminium oder Kunststoff und bildet kein Gehäuse im Sinne der vorbekannten Vorrichtungen. Die Schale und ebenso die Kaschierung 10 sind flexibel ausgebildet und gewähren eine funktionsgerechte, einfache Handhabung bei der Montage. Die erfindungsgemäße Vorrichtung besteht grundsätzlich aus der Schale 8, welche das Kunststoffrohr 6 unmittelbar umgibt und bedarfsweise zusätzlich als Feuchtigkeitssperre mit der Kaschierung oder Folie 10 versehen ist, welche in zweckmäßiger Weise eine Wanddicke < 0,8, vorzugsweise < 0,5 mm aufweist.

Die Dicke 14 der Schale 8 ist erfindungsgemäß auf den Außendurchmesser 16 des Rohres 6 abgestimmt. Die Dicke 14 ist mindestens 40%, vorzugsweise 50% größer als der Außendurchmesser 16 des Rohres 6. Die in axialer Richtung des Rohres 6 gemessene Länge 18 der Vorrichtung oder Schale 8 ist hingegen weitgehend unabhängig vom Rohrdurchmesser definiert vorgegeben, und zwar in Abhängigkeit von der Decke 19 der Wand 2; dies gilt gleichermaßen bei einer Deckendurchführung, wobei die Länge der Vorrichtung auf die Deckendicke abgestimmt ist. Die Vorrichtung ist für eine Mindestdicke 19 der Wand 2 von 100 mm ausgelegt. In zweckmäßiger Weise entspricht die Länge 18 mindestens der Wanddicke 19, so daß die freien Enden der Vorrichtung oder Schale 8 im wesentlichen bündig zu den beiden Wandflächen angeordnet sind. Bedarfsweise kann die Schale 8 aber auch um einen vorgegebenen kleinen Betrag über die Wandflächen vorstehen. Maximal beträgt die Länge 18 jedoch 300 mm, so daß mit minimalem Materialeinsatz den Anforderungen hinsichtlich Brandschutz und Schallschutz entsprochen wird. Festzuhalten bleibt ferner, daß die erfindungsgemäße Vorrichtung in Kombination mit Rohren mit einem Außendurchmesser 16 gleich oder größer 32 mm verwendet wird.

Die Schichtdicke 14 der Schale 8 kann vor allem bei kleineren Rohrdurchmessern, und zwar insbesondere im Bereich zwischen 16 und 40 mm aus Gründen der produktionstechnischen Vereinfachung gleichgroß vorgegeben werden und insbesondere in der Größenordnung von 20 mm betragen. Für Außendurchmesser 16 derartige Rohre ist gleichwohl die für die Wärmedämmung wichtige, vorstehend angegebene Bedingung erfüllt. Für Außendurchmesser 16 von 50 mm und größer werden entsprechend die Schichtstärken unter Einhaltung der genannten Bedingung vorgegeben. In einer besonderen Ausgestaltung der Erfindung wird die Dicke 14 der Vorrichtung oder Schale 8 mit mindestens 40 %, vorzugsweise mindestens 50 % des Außendurchmessers 16 des Rohres 6 vorgegeben, um den Mindestanforderungen für Brandschutz und / oder Schallschutz zu entsprechen.

Die Schale 8 besteht aus flexiblem, im wesentlichen formstabilen Material mit einem Schmelzpunkt > 800°C, insbesondere > 1000°C, und ist kunststoffgebunden und ferner nicht brennbar. Die Dichte des Materials für eine Umgebungstemperatur von 25°C liegt im Bereich zwischen 2,2 und 3 g/ccm, vorzugsweise im Bereich zwischen 2,4 bis 2,8 g/ccm und insbesondere in der Größenordnung von 2,6 g/ccm. Des weiteren beträgt die Schüttdichte des zum Einsatz gelangenden Materials für eine Umgebungstemperatur von 25°C zwischen 20 bis 250 kg/m³ und liegt vorzugsweise im Bereich zwischen 25 bis 200 kg/m³. Eine mit der erfindungsgemäßen Vorrichtung aufgebaute Wanddurchführung erfüllt die Brandschutzanforderungen gemäß Klasse F90 ebenso wie die Schallschutzanforderungen gemäß DIN 4109. Des weiteren wird die Heizungsanlagenverordnung erfüllt, welche vor allem bei Kunststoffrohren für Warmwasser, sei es Frischwasser oder in Heizungsanlagen, zu beachten ist.

In der Zeichnung ist die Schale 8 samt Kaschierung 10 als eine über den Umfang geschlossene Einheit dargestellt. In zweckmäßiger Weise kann im Rahmen der Erfindung die Schale 8 und ggfs. die Kaschierung 10 eine vorzugsweise axial verlaufende Trennstelle 20 aufweisen, wie es mit strichpunktierter Linie angedeutet ist. Die erfindungsgemäße Vorrichtung ist derart flexibel, daß sie aufklappbar ist und über das bereits durch die Durchführung 4 geführte und montierte Rohr 6 geschoben werden kann. Nachfolgend wird die Trennstelle in geeigneter Weise mit Klebemitteln, Klebeband oder dergleichen in vorteilhafter Weise wieder geschlossen, um vor allem beim Ausgießen der Durchführung mit Mörtel 12 dort ein Eindringen von Feuchtigkeit oder gar Mörtel zu unterbinden. Es sei festgehalten, daß das bei vorbekannten Vorrichtungen für den Brandschutz vorgesehene Blähmaterial nicht hinreichend flexibel ist und das eingangs erläuterte Gehäuse daher scharnierartig aufklappbar ist, während die erfindungsgemäße Vorrichtung als insgesamt flexible Manschette ausgebildet und um das Rohr 6 legbar ist.

Fig. 2 zeigt die Vorrichtung, welche als F90-Deckendurchführung zum Einsatz gelangt. Die Länge 18 ist als Standardlänge für die unterschiedlichen Durchmesser, insbesondere im Bereich zwischen 16 bis 90 mm mit maximal 300 mm vorgegeben. Die Decke 24 besitzt eine Dicke 26, auf welche die Länge 18 der Schale 8 abgestimmt ist. Die Länge 18 ist mindestens gleich groß wie die Deckendicke 26, welche ihrerseits wenigstens 125 mm beträgt. Die für eine Deckendurchführung vorgesehen Schale weist somit eine minimale Länge 18 von 125 mm auf. Der Innendurchmesser der direkt an der Außenfläche 22 des Rohres 6 anliegenden Schale 8 ist vorteilhaft um einen vorgegebenen Betrag kleiner als der Rohraußendurchmesser 16, so daß durch Klemmwirkung eine Fixierung auf dem Rohr 6 gewährleistet ist und ein Herabrutschen aus der gewünschten Position vor dem Ausgießen mit Mörtel 12 oder dergleichen verhindert wird. Da kein schweres Gehäuse vorgesehen ist, ist das Gesamtgewicht der erfindungsgemäßen Vorrichtung vergleichsweise gering und es sind keine besonderen Sicherungs- oder Befestigungsmaßnahmen zwischen Decke und Vorrichtung vor der endgültigen Fixierung und/oder dem Ausgießen der Durchführung mit Mörtel oder dergleichen erforderlich. Andererseits wird erfindungsgemäß die Klemmung zwischen der Schale 8 und dem Rohr 6 derart vorgegeben, daß manuell eine axiale Längsverschiebung bezüglich des Rohres 6 problemlos möglich ist. Somit kann die Vorrichtung insgesamt außerhalb der Durchführung auf das Rohr aufgesetzt bzw. aufgeschoben werden und durch Längsverschiebung auf dem Rohr in die geforderte Position in die Durchführung 4 geschoben werden. Der Arbeits- und Montageaufwand ist folglich recht gering.

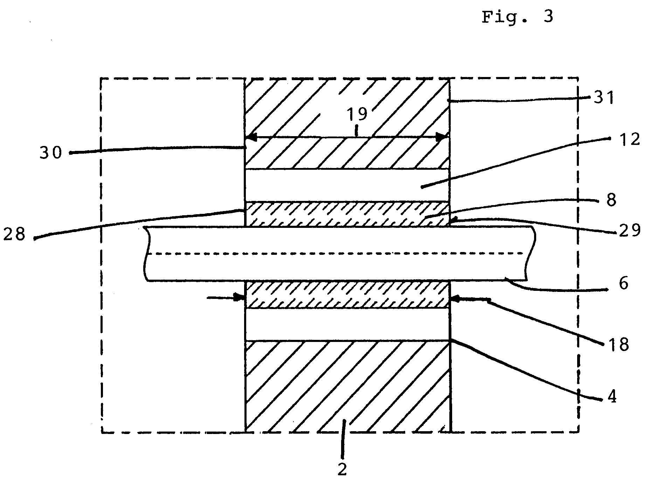

Fig. 3 zeigt schematisch einen Schnitt durch eine Wand 2 mit einer Durchführung 4 für das Rohr 6. In zweckmäßiger Weise liegen die axialen Stirnflächen 28, 29 der Schale 8 im wesentlichen bündig mit den Wandflächen 30, 31. Wie ersichtlich, ist die Länge 18 der Schale 8 im wesentlichen gleich groß wie die Dicke 19 der Wand 2. Der Zwischenraum zwischen der Schale 8 und der Innenfläche der Wanddurchführung 4 ist mit Brandschutzmörtel 12 ausgefüllt bzw. ausgegossen. Es sei festgehalten, daß in gleicher Weise bei einer Deckendurchführung die Länge und Positionierung der Schale im Rahmen der Erfindung vorgegeben wird.

### Bezugszeichen

- 2: Wand
- 4: Durchführung
- 6: Rohr
- 8: Schale / Schicht
- 10: Kaschierung / Folie
- 12: Mörtel
- 14: Dicke von 8
- 16: Außendurchmesser von 6
- 18: Länge von 8
- 19: Dicke von 2
- 20: Trennstelle
- 22: Außenfläche von 6
- 24: Decke
- 26: Dicke von 24
- 28, 29: Stirnfläche von 8
- 30, 31: Wandfläche

## Patentansprüche

1. Vorrichtung zur Rohrabschottung und zum Schallschutz enthaltend eine Schicht aus hitzebeständigem Material, sowie wenigstens eine das Rohr umgebende Schicht zum Schallschutz,
dadurch gekennzeichnet,
daß eine einzige Schicht (8) für integrierten Brandschutz und Schallschutz vorgesehen ist, welche Material mit einem Schmelzpunkt > 800°C enthält.

2. Vorrichtung nach Anspruch 1, gekennzeichnet durch die Verwendung mit Rohren (6), deren Außendurchmesser (16) wenigstens 32 mm beträgt.

3. Vorrichtung nach einem der Ansprüche 1 oder 2, dadurch gekennzeichnet, daß die axialen Stirnflächen (28, 29) im wesentlichen bündig mit den Wandfläche (30, 31) angeordnet sind und / oder daß die axiale Länge (18) maximal 300 mm beträgt.

4. Vorrichtung nach einem der Ansprüche 1 bis 3, gekennzeichnet durch die Verwendung in Wänden (2) mit einer Mindestdicke (19) von 100 mm und / oder in Decken (24) mit einer Mindestdicke von 125 mm.

5. Vorrichtung nach einem der Ansprüche 1 bis 4, dadurch gekennzeichnet, daß die Schicht (8) als eine flexible Schale ausgebildet ist und/oder einen Schmelzpunkt > 900°C, insbesondere > 1000°C aufweist und / oder daß die Schicht oder Schale (8) Steinwolle, Glaswolle oder Mineralwolle oder dergleichen enthält und vorzugsweise mit Kunstharz gebunden ausgebildet ist und / oder daß die Schicht oder Schale (8) im wesentlichen aus einem feuchtigkeitsabweisenden Werkstoff besteht.

6. Vorrichtung nach einem der Ansprüche 1 bis 5, dadurch gekennzeichnet, daß die Schicht oder Schale (8) aus formbeständigen und/oder hinreichend flexiblem Material derart besteht, daß beim Vorhandensein einer vorzugsweise axialen Trennstelle (20) die Vorrichtung aufklappbar und auf das Rohr (6) aufschiebbar ist.

7. Vorrichtung nach einem der Ansprüche 1 bis 6, dadurch gekennzeichnet, daß die Schicht oder Schale (8) eine Dicke (14) aufweist, welche größer als 40%, vorzugsweise größer als 50% des Außendurchmessers (16) des Rohres (6) ist.

8. Vorrichtung nach einem der Ansprüche 1 bis 7, dadurch gekennzeichnet, daß die Länge (18) der Schicht oder Schale (8) im wesentlichen unabhängig von dem Rohraußendurchmesser (16) für unterschiedlich große Rohrdurchmesser konstant vorgegeben ist und/oder als Standardlänge zumindest für eine Anzahl von unterschiedlichen Rohrdurchmessern definiert vorgegeben ist.

9. Vorrichtung nach einem der Ansprüche 1 bis 8, dadurch gekennzeichnet, daß an der Außenfläche der Schale oder Schicht (8) eine Kaschierung oder Folie (10), vorzugsweise aus Aluminium oder Kunststoff vorgesehen ist, welche vorzugsweise eine Wanddicke < 0,8 mm, insbesondere < 0,5 mm aufweist.

10. Vorrichtung nach einem der Ansprüche 1 bis 9, dadurch gekennzeichnet, daß die für Brandschutz und Schallschutz integrierte Schale oder Schicht (8) durch Klemmsitz derart auf das Rohr (6) aufklemmbar ist, daß eine Selbstsicherung bezüglich des Rohres (6) gegen axiales Verschieben gegeben ist und/oder daß der Innendurchmesser der Schale oder Schicht (8) um einen vorgegebenen Betrag kleiner als der Außendurchmesser (16) des Rohres (6) ist.

11. Vorrichtung nach einem der Ansprüche 1 bis 10, dadurch gekennzeichnet, daß die Dichte des Materials der Schale oder Schicht (8) im Bereich zwischen 2,2 und 3 g/ccm, vorzugsweise zwischen 2,2 bis 2,8 g/ccm und insbesondere im wesentlichen 2,6 g/ccm groß ist, und / oder daß die Schüttdichte des Materials der Schale oder Schicht (8) im Bereich zwischen 20 bis 250 kg/m³ und vorzugsweise im Bereich zwischen 25 bis 200 kg/m³ groß ist.
